# EUROPÄISCHE PATENTSCHRIFT

(11) **EP 3 257 663 B1**
(45) Veröffentlichungstag und Bekanntmachung des Hinweises auf die Patenterteilung: **30.09.2020**
(21) Anmeldenummer: 17175903.8
(22) Anmeldetag: 14.06.2017
(51) Int. Cl.: B29C 70/38, B29B 11/16

(54) **VERFAHREN ZUM HERSTELLEN VON HALBZEUGEN FÜR FASER-KUNSTSTOFF-VERBUNDBAUTEILE**
METHOD FOR PRODUCING SEMIFINISHED PRODUCTS FOR FIBRE-PLASTIC COMPOSITE COMPONENTS
PROCÉDÉ DE FABRICATION DE SEMI-PRODUITS POUR ÉLÉMENTS STRUCTURAUX COMPOSITES FIBRES/PLASTIQUE

(30) Priorität: 17.06.2016 DE 102016111080
(43) Veröffentlichungstag der Anmeldung: 20.12.2017
(73) Patentinhaber: Cetex Institut gGmbH, 09120 Chemnitz (DE); Technische Universität Chemnitz, 09111 Chemnitz (DE)
(72) Erfinder: Kroll, Lothar, 01324 Dresden (DE); Nendel, Wolfgang, 09569 Oederan (DE); Gerstenberger, Colin, 09126 Chemnitz (DE); Nendel, Sebastian, 09577 Niederwiesa / OT Lichtenwalde (DE); Heinrich, Hans-Jürgen, 09247 Chemnitz / OT Röhrsdorf (DE)
(74) Vertreter: Steiniger, Carmen

(56) Entgegenhaltungen:
- DE-A1-102004 060 674
- JP-A- 2014 189 908

## Beschreibung

Die vorliegende Erfindung betrifft ein Verfahren zum Herstellen von flächigen, faserverstärkten Halbzeugen für Faser-Kunststoff-Verbundbauteile, bei dem Endlosfasern in wenigstens zwei Lagen übereinander während eines mittels eines Lagentransportmechanismus durchgeführten kontinuierlichen Transportes dieser Lagen abgelegt werden, wobei die Faserorientierung in einer ersten Lage der wenigstens zwei Lagen sich von der Faserorientierung in wenigstens einer weiteren Lage der wenigstens zwei Lagen während des Transportes der wenigstens zwei Lagen unterscheidet.

Insbesondere im Flugzeugbau und im Sportbereich, aber auch im Automobilbau gewinnt der Einsatz von faserverstärkten Kunststoffen zunehmend an Bedeutung. Dies liegt nicht zuletzt an dem vergleichsweise geringen Gewicht sowie der hohen Steifigkeit und Festigkeit dieser Werkstoffe. Faserverstärkte Kunststoffe bestehen aus Verstärkungsfasern und einer Kunststoffmatrix, welche die Fasern umgibt, wobei die mechanischen und thermischen Eigenschaften von faserverstärkten Kunststoffen über eine Vielzahl von Parametern eingestellt werden können. Beispielsweise können die Eigenschaften von faserverstärkten Kunststoffen durch Variation der Faserausrichtung, des Faservolumenanteils, der Schichtreihenfolge und -ausbildung, der Faserlänge, der Eigenschaften der Fasern und/oder des Matrixwerkstoffes beeinflusst werden.

Aus dem Stand der Technik sind unterschiedliche Verfahren zum Herstellen von faserverstärkten Kunststoffen bekannt. Faserverstärkte Kunststoffe können beispielsweise mittels Spritzgussverfahren, Strangziehverfahren oder als Sheet Molding Compound hergestellt werden. Häufig werden faserverstärkte Kunststoffe jedoch als Laminate ausgebildet, da hierbei die Vorteile einer individuellen Faserausrichtung ausgenutzt werden können. Die hierfür eingesetzten Laminate bestehen in der Regel aus übereinander angeordneten Faserlagen, deren Fasern in unterschiedlichen Faserrichtungen angeordnet sind.

In der Druckschrift WO 2015/024806 A1 ist ein Verfahren zur Herstellung eines faserverstärkten Kunststoffbauteils beschrieben, bei welchem ein Vorformling vorzugsweise aus wenigstens drei übereinandergestapelten, unter Druck und Wärme verfestigten und gegebenenfalls dreidimensional verformten Faserhalbzeugzuschnitten ausgebildet wird. Die Faserhalbzeugzuschnitte werden durch paralleles Ablegen und Fixieren von Endlos-Verstärkungsfäden in Endkonturform auf einer in einer Förderrichtung kontinuierlich geförderten Endlos-Trägerbahn und nachfolgendes Zuschneiden der Endlos-Trägerbahn entsprechend einer Halbzeugendkontur hergestellt. Zur Generierung eines Vorformlings mit hoher Festigkeit weisen die Endlos-Verstärkungsfäden der einzelnen Faserhalbzeugzuschnitte unterschiedliche Verstärkungsfadenorientierungen auf. Dies wird dadurch realisiert, dass zur Ausbildung der Faserhalbzeugzuschnitte flächen- und konturgleiche, jedoch im Winkel zur Förderrichtung der Endlos-Trägerbahn gedrehte Flächengebilde aus dem abgelegten Flächengebilde ausgeschnitten und dann übereinander angeordnet werden.

Nachteilig bei dieser Art der Herstellung von Vorformlingen für faserverstärkte Kunststoffbauteile ist, dass für jede der Lagen der Preform jeweils eine als Trägermaterial dienende Unter- bzw. Zwischenlage benötigt wird, die die Kennwerte des aus der Preform auszubildenden Bauteils verschlechtern.

In der Druckschrift DE 100 05 202 B4 sind ein Verfahren und eine Vorrichtung zur kontinuierlichen bauteil- und prozessorientierten Herstellung von Verstärkungsstruktur-Halbzeugen für Faser-Kunststoff-Verbundwerkstoffe offenbart, bei welchen die Verstärkungsstruktur-Halbzeuge ohne Verwendung von zusätzlichen Materialbahnträgern erzeugt werden. Zur Herstellung der Verstärkungsstruktur-Halbzeuge werden Faserbündel oder Rovings mit einer Legeeinheit in Lagen mit verschiedenen Faserorientierungen übereinander über die gesamte Breite eines Transportgatters abgelegt und zu einer Nähstation transportiert. In der Nähstation wird die Endkontur des herzustellenden Bauteils in beliebiger Anzahl und Anordnung auf den flächig abgelegten Fasern aufgenäht. Ferner werden beispielsweise Ausbrüche mittels Nähten abgebildet und/oder zusätzliche Nähte zur Steigerung der Schiebefestigkeit eingebracht. Nachfolgend wird die gebildete Preform aus dem Gelege entlang einer zur Befestigungsnaht im Wesentlichen parallel und im Abstand zu dieser verlaufenden Schnittlinie ausgeschnitten. Ein Materialverschnitt soll vorzugsweise durch optimale Anzahl und Anordnung der herzustellenden Preforms über die gesamte Legebreite der Maschine reduziert werden.

Bei dieser Variante zum Herstellen von faserverstärkten Halbzeugen entsteht verhältnismäßig hoher Materialabfall durch das Ausschneiden der Preforms aus dem Gelege.

Aus der Druckschrift DE 10 2004 060 674 A1 sind ein Verfahren und eine Vorrichtung zur Herstellung eines flächigen Faser-Vorformlings bekannt, bei welchen entweder flache, übereinander liegende Bahnen bei deren kontinuierlichem Transport quer zur Transportrichtung geschnitten werden oder einzelne, vorab auf eine vorbestimmte Länge zugeschnittene, schmale unidirektionale Faserbänder oder Rovings entsprechend einer Endkonturform des herzustellenden Faser-Vorformlings auf einer Unterlage nebeneinander lose abgelegt werden.

Es ist daher die Aufgabe der vorliegenden Erfindung, ein kostengünstiges Verfahren zum Herstellen von flächigen, faserverstärkten Halbzeugen für Faser-Kunststoff-Verbundbauteile mit vorteilhaften Bauteilfestigkeitskennwerten bereitzustellen, welches es ermöglicht, faserverstärkte Halbzeuge in Endkonturform effizient und mit möglichst geringem Materialabfall herzustellen.

Die Aufgabe wird durch ein Verfahren nach Anspruch 1 gelöst, wobei die Endlosfasern der wenigstens zwei Lagen ohne seitliche Halterung der Endlosfasern in einer von der Breite eines verwendeten Transportbandes und/oder der Breite des Lagentransportmechanismus unabhängigen, aber sich nicht über die Breite des Transportbandes und/oder die Breite des Lagentransportmechanismus erstreckenden Halbzeugendkonturform gerade abgelegt und entsprechend der jeweiligen Breite der Halbzeugendkonturform nach dem Ablegen abgelängt werden und in wenigstens einem Bereich der Halbzeugendkonturform auf den Lagen wenigstens eine eine Verstärkung ausbildende Endlos-Verstärkungsfaser verlegt wird.

Erfindungsgemäß werden zur Ausbildung eines flächigen, faserverstärkten Halbzeuges in einer ersten Verlegeeinrichtung Endlosfasern in Halbzeugendkonturform eine erste Lage ausbildend auf ein Trägermaterial oder ein Transportband abgelegt und entsprechend der jeweiligen Breite der Halbzeugendkonturform abgelängt. Hierbei sind die Endlosfasern der ersten Lage gerade verlegt und weisen eine erste Faserorientierung auf. Erfindungsgemäß werden die Endlosfasern also erst abgelängt, wie beispielsweise abgeschnitten, wenn die jeweilige Endlosfaser wenigstens teilweise auf das Trägermaterial oder das Transportband abgelegt wurde. Vorzugsweise wird die Endlosfaser dabei schon dann abgelängt, wenn sie zwar schon, aber noch nicht vollständig auf dem Trägermaterial oder dem Transportband aufliegt. Nach dem Ablängen fällt dann das bis dahin noch nicht auf dem Trägermaterial oder dem Transportband aufliegende Ende der abgelängten Endlosfaser auf das Trägermaterial oder das Transportband. Das Ablängen erfolgt also erfindungsgemäß beim Verlegen der Endlosfasern auf dem Trägermaterial oder dem Transportband. Das Ablegen und Ablängen erfolgt während des vorzugsweise kontinuierlichen Transportes bzw. Weitertransportes der bereits abgelegten Endlosfasern. Die Halbzeugendkonturform wird demnach bei der vorliegenden Erfindung durch eine Vielzahl von aus den Endlosfasern durch Ablängen erhaltenen Einzelrovings ausgebildet, wobei die Einzelrovings endkonturnah beim Ablegen auf dem Trägermaterial oder dem Transportband abgelängt werden.

In der aus einer Anzahl von Endlosfasern ausgebildeten ersten Lage sind die einzelnen Endlosfasern gleichmäßig über die komplette Halbzeugendkonturform verteilt verlegt, wobei alle Endlosfasern dieser Lage jeweils die gleiche Faserorientierung aufweisen.

Während die erste Lage durch das Verlegen der wenigstens einen Endlosfaser ausgebildet wird, wird das die wenigstens eine Lage transportierende Transportband weiterbewegt und/oder der Lagentransportmechanismus kontinuierlich weiter betrieben, wodurch die Fertigungszeit für die Herstellung des faserverstärkten Halbzeuges möglichst gering gehalten werden kann.

In einer sich in Förderrichtung der ersten Lage an die erste Verlegeeinrichtung anschließenden zweiten Verlegeeinrichtung werden direkt auf die erste Lage wenigstens eine weitere Lage ausbildende Endlosfasern aufgebracht, wobei auch hierbei das Förderband bzw. der Lagentransportmechanismus kontinuierlich weiterbetrieben wird.

Bei dem erfindungsgemäßen Verfahren werden auch die die wenigstens eine weitere Lage ausbildenden Endlosfasern in der Endkonturform des Halbzeuges verlegt, wobei die Endlosfasern der weiteren Lage eine sich von der Faserorientierung der Endlosfasern der ersten Lage unterscheidende Faserorientierung aufweisen. Durch die unterschiedlichen Faserorientierungen der aufeinander abgelegten Lagen kann insbesondere die Festigkeit und Stabilität des hergestellten Halbzeuges gesteigert werden.

Die die weitere Lage ausbildenden Endlosfasern sind bevorzugt gleichmäßig über die Halbzeugendkonturform verteilt mit gleicher Faserorientierung verlegt.

Die Endlosfasern der einzelnen Lagen sind jeweils geradlinig verlegt, da hierdurch das erfindungsgemäße Verfahren mit hoher Effizienz realisiert werden kann.

Je nach Anwendungsfall des hergestellten Halbzeuges kann die Anzahl der übereinander angeordneten Lagen variieren. Insofern mehr als zwei Lagen abgelegt werden, schließen sich in Lagentransportrichtung zusätzliche Verlegeeinrichtungen zum Ablegen weiterer Lagen an die ersten beiden Verlegeeinrichtungen an. Vorteilhafterweise sollte die Anzahl der Lagen des Halbzeuges anwendungsfallspezifisch gewählt werden.

Zum optimalen Verlegen der Endlosfasern hat es sich als vorteilhaft erwiesen, wenn jene Verlegeeinrichtungen, die keine parallel zu der Transportrichtung ausgerichtete Endlosfasern verlegen, entlang des Transportbandes oder Transportmechanismuses verfahrbar angeordnet sind, da so die Endlosfasern kontinuierlich über die Halbzeugendkonturform verteilt werden können. In anderen Ausführungsformen des erfindungsgemäßen Verfahrens können jedoch auch alle Verlegeeinrichtungen, keine der Verlegeeinrichtungen oder andere als die zuvor erwähnten Verlegeeinrichtungen verfahrbar vorgesehen werden.

Vorteilhafterweise unterscheiden sich die Faserorientierungsrichtungen der Endlosfasern der ersten bis n-ten Lage voneinander. In weiteren Ausgestaltungsvarianten kann wenigstens eine der Lagen drei bis n jedoch auch eine der Endlos-Verstärkungsfaserorientierungsrichtung der ersten oder zweiten Lage und/oder einer der darauf abgelegten Lagen entsprechende Faserorientierungsrichtung aufweisen.

Das erfindungsgemäße Verfahren arbeitet halbzeugendkonturentsprechend, kontinuierlich, ist großserientauglich und hochproduktiv.

In speziellen Ausführungsformen des Halbzeuges kann zudem zwischen den einzelnen Lagen ausbildenden Endlosfasern wenigstens eine zusätzliche, stabilisierende und/oder funktionserfüllende Zwischenschicht eingebracht werden.

Erfindungsgemäß werden die Endlosfasern der einzelnen Lagen in Halbzeugendkonturform, unabhängig von der Breite des verwendeten Transportbandes und/oder Lagentransportmechanismus, aber nicht über die Breite des Transportbandes und/oder Lagentransportmechanismus hinausgehend abgelegt, wodurch ein kostengünstiges faserverstärktes Halbzeug ohne bzw. mit einem sehr geringen Anteil an Materialabfall hergestellt werden kann.

Durch das Ablegen der Endlosfasern in Halbzeugendkonturform kann insbesondere dann, wenn kein zusätzliches Trägermaterial zum Ausbilden des Halbzeuges verwendet wird, auf ein Zuschneiden der durch das Ablegen der Endlosfasern ausgebildeten Lagen verzichtet werden, womit der Bearbeitungsprozess verkürzt und die Fertigungs- und Materialkosten gesenkt werden können. Zur Herstellung von Halbzeugen mit sehr hohen Maßanforderungen und/oder einer sehr komplexen Geometrie, welche sich beispielsweise nur sehr schwierig durch Verlegen der Endlos-Verstärkungsfasern erzeugen lassen, können die abgelegten Lagen jedoch auch zusätzlich zugeschnitten und/oder ausgestanzt werden. Hierbei kann entweder die komplette Halbzeugendkonturform oder nur ein Teil der Halbzeugendkonturform zugeschnitten und/oder ausgestanzt werden.

Bei dem erfindungsgemäßen Verfahren werden die Endlosfasern nach dem Ablegen zu einer der Lagen während des Transportes der jeweiligen Lage abgelängt. Durch das Ablängen der Endlosfasern während des Transportes der wenigstens einen Lage wird die Fertigungszeit für die Herstellung des faserverstärkten Halbzeuges wesentlich verkürzt. Zudem wird durch den somit kontinuierlich ermöglichten Lagentransport den Steuerungsaufwand der verwendeten Halbzeugproduktionsanlage verringert.

Das Ablängen der Endlosfasern kann beispielsweise mittels Laser, Ultraschall, Wasserstrahl oder mechanischem Schneiden erfolgen. Ferner kann die wenigstens eine Endlos-Verstärkungsfaser bzw. Endlosfaser auch gerissen oder in anderer Form durchtrennt, wie zum Beispiel abgerissen, werden.

Das bloße Ablegen der Endlosfasern und der Verzicht auf eine seitliche Halterung der Endlosfasern führt dazu, dass das erfindungsgemäße Verfahren einfach und schnell ausgeführt werden kann, da die verlegten Endlosfasern nicht erst umständlich und bearbeitungszeitbeanspruchend in eine Halterung oder ähnliches eingehängt, eingelegt oder eingeklemmt werden müssen. Insbesondere kann ein Halten der Endlosfasern durch eine an dem Transportband oder dem Lagentransportmechanismus vorgesehene Haltevorrichtung, wie beispielsweise eine an oder nahe einem Randbereich des Transportbandes oder des Lagentransportmechanismus angebrachte Kammleiste, um welche die zu verlegenden Endlosfasern geschlungen werden, vermieden werden.

Erfindungsgemäß wird in wenigstens einem Bereich der Halbzeugendkonturform auf den Lagen wenigstens eine eine Verstärkung ausbildende Endlos-Verstärkungsfaser verlegt.

Durch das Ablegen der wenigstens einen Endlos-Verstärkungsfaser auf die zuvor ausgebildeten wenigstens zwei Lagen des Halbzeuges kann das Halbzeug belastungsspezifisch verstärkt werden und somit höheren Belastungen standhalten. Die Form und Abmessung der aus der wenigstens einen Endlos-Verstärkungsfaser ausgebildeten Verstärkung sowie deren Anordnung auf der Halbzeugendkonturform sind anwendungsfallspezifisch zu wählen. Ferner kann auch die Anzahl der auf die Halbzeugendkonturform aufgebrachten Verstärkungen einsatzspezifisch variieren.

Je nach Ausgestaltung des herzustellenden Halbzeuges muss die Verstärkung aus Endlos-Verstärkungsfasern nicht zwingend auf den abgelegten Lagen aufgebracht werden, sondern kann auch zwischen zwei Lagen des Halbzeuges eingebracht werden.

Es ist jedoch von Vorteil, die Verstärkung zuoberst auf allen Lagen eines aus den Endlosfasern ausgebildeten Lagenstapels vorzusehen, da es durch den lastpfadgerechten Aufbau der Verstärkung an der Stelle der Verstärkung zu einer Verdickung kommt, wodurch bei einer darauf erfolgenden Ablage weiterer Lagen die Endlosfasern solcher Lagen beispielsweise in ihrer Lage verrutschen können.

Auch ist es günstig, die Verstärkung in wenigstens einem Randbereich der Halbzeugendkonturform und nicht etwa in deren Mitte vorzusehen.

Wenigstens eine Endlos-Verstärkungsfaser der Verstärkung einer vorgegebenen Verstärkungskontur kann beispielsweise mäanderförmig und/oder wellenförmig und/oder zickzackförmig und/oder wirr entsprechend einer vorgegebenen Verstärkungskontur verlegt werden.

Der Abstand zwischen benachbarten Abschnitten von Endlos-Verstärkungsfasern der Verstärkung kann dabei über die Länge der benachbart angeordneten Abschnitte variieren. Somit ist es beispielsweise möglich, die Endlos-Verstärkungsfasern um bestimmte Krafteinleitungspunkte des späteren Bauteils herumzuleiten.

Insbesondere im Hinblick auf eine optimale Stabilisierung des herzustellenden Halbzeuges und/oder eine anschließende Verformung der das Halbzeug ausbildenden Lagen hat es sich als vorteilhaft erwiesen, wenn die wenigstens eine, die Verstärkung ausbildende Endlos-Verstärkungsfaser einer vorgegebenen Kontur angepasst verlegt wird. Hierbei kann/können die Endlos-Verstärkungsfaser(n), wie bereits oben erwähnt, mit variierendem Abstand zueinander verlegt werden, wodurch in das Halbzeug beispielsweise durch Verformung erzeugte Knicke, Einengungen oder ähnliches besonders gut ausgebildet werden können. Zudem kann in Bereichen höherer Belastung der Abstand der die Verstärkung ausbildenden Endlos-Verstärkungsfaser(n) zueinander verringert werden und in Bereichen geringerer Belastung ein vergleichsweise großer Abstand gewählt werden, sodass eine sich verjüngende Stelle in der Verstärkung ausgebildet wird. Resultierend aus einer derartigen Anordnung der Endlos-Verstärkungsfaser(n) können der Einsatz an Endlos-Verstärkungsfasern reduziert und damit die Kosten und das Gewicht des herzustellenden Halbzeuges minimiert werden.

Damit das herzustellende Halbzeug besonders hohen Belastungen standhalten kann, hat es sich zudem als vorteilhaft erwiesen, wenn die wenigstens eine Endlos-Verstärkungsfaser der Verstärkung lastpfadgerecht verlegt wird. In Abhängigkeit von dem Einsatzgebiet und/oder der maximalen auftretenden Belastung können auch mehrere die Verstärkung ausbildende Endlos-Verstärkungsfasern übereinander gelegt werden.

In einer besonders bevorzugten Ausführungsform des erfindungsgemäßen Verfahrens zum Herstellen eines faserverstärkten Halbzeuges werden die wenigstens zwei Lagen direkt auf eine Oberfläche des Transportbandes, ohne Verwendung eines Trägermaterials unter oder zwischen diesen Lagen abgelegt.

Durch den Verzicht auf ein Trägermaterial können unter anderem die Material- und Fertigungskosten gering gehalten werden, da beispielsweise die Kosten für das Trägermaterial und die Kosten für das Handling dieses entfallen. Zudem wird auch das Herstellungsverfahren an sich vereinfacht, da unter anderem das Zuführen des Trägermaterials und das Verbinden des Trägermaterials mit den Endlosfasern wegfallen. Vorteilhafterweise weisen lediglich aus Endlosfasern ohne zusätzliches Trägermaterial hergestellte Halbzeuge auch ein geringeres Gewicht auf, was insbesondere für Leichtbauanwendungen vorteilhaft nutzbar ist.

In alternativen Ausführungsformen des erfindungsgemäßen Verfahrens kann zur Herstellung des Halbzeuges auch ein zusätzliches Trägermaterial unter und/oder zwischen und/oder über den wenigstens zwei Lagen verwendet werden. Anwendungsfallspezifisch kann dieses Trägermaterial also als Grund- und/oder Zwischen- und/oder Deckschicht den aus den Endlosfasern ausgebildeten Lagen zugeführt werden. Durch den Einsatz wenigstens eines zusätzlichen Trägermaterials kann die Stabilität des herzustellenden Halbzeuges erhöht werden. Das Trägermaterial kann dem Herstellungsprozess entweder als Materialbahn zugeführt werden und zu einem späteren Zeitpunkt zugeschnitten werden oder bereits zugeschnitten den Herstellungsprozess zugeführt werden. Hierbei weist das Trägermaterial vorzugsweise die Halbzeugendkonturform auf, kann jedoch auch jede beliebige andere Form aufweisen und die aus den wenigstens zwei Lagen mit der Verstärkung ausgebildete Halbzeugendkonturform somit komplett oder nur teilweise bedecken.

In einer bevorzugten Ausführungsform des erfindungsgemäßen Verfahrens werden die Endlosfasern wenigstens einer der wenigstens zwei Lagen in einem Abstand zueinander in der jeweiligen Lage verlegt, der von 6 mm bis 100 mm beträgt. Dabei ist der Abstand der Endlosfasern innerhalb der jeweiligen Lage vorzugsweise gleich groß.

Durch die Anordnungen der Endlosfasern mit gleichmäßigem Abstand zueinander können Halbzeuge mit über die gesamte Halbzeugfläche konstantem Belastungswiderstand hergestellt werden. Vorteilhafterweise sollte der Abstand zwischen den Endlosfasern bzw. Teilen von Endlosfasern zueinander in Abhängigkeit der Bauteilgeometrie gewählt werden.

In alternativen Ausführungsformen des erfindungsgemäßen Verfahrens können die Endlosfasern auch mit einem Abstand von kleiner als 6 mm oder größer als 100 mm zueinander verlegt werden. Ebenso können die Endlosfasern innerhalb einer Lage in alternativen Ausführungsformen der vorliegenden Erfindung auch mit unterschiedlich großen, der partiellen Belastung des Halbzeuges angepassten Abständen zueinander verlegt werden.

In zweckmäßigen Ausgestaltungen des erfindungsgemäßen Verfahrens werden trockene Filamente oder Faserverbände, aus Verstärkungs- und Matrixfasern ausgebildete Hybridfasern, bebinderte Filamente oder Faserverbände, während des Halbzeugherstellungsverfahrens zu bebindernde Filamente oder Faserverbände und/oder thermoplastische unidirektionale Bänder als Endlosfasern und/oder Endlos-Verstärkungsfaser verwendet.

Vorteilhafterweise können durch das Bebindern wenigstens einzelner Filamente, Fasern und/oder Faserverbände einzelne Filamente, Fasern und/oder Faserverbände zusammengefügt bzw. gegen verrutschen gesichert werden. Zum Bebindern werden beispielsweise thermoplastische Polymere eingesetzt, welche flächig auf die Filamente, Fasern und/oder Faserbündel aufgesprüht, aufgestreut oder flächig aufgebracht werden. Durch Erwärmung werden die Binder klebrig, wodurch eine Fixierung erreicht wird.

Insbesondere können für die Ausbildung der Endlosfasern und/oder Endlosverstärkungsfaser(n) Filamente und/oder Fasern aus Carbon, Bor, Glas, Keramik, Basalt und/oder Aramid zum Einsatz kommen, welche trocken, als aus Verstärkungs- und Matrixfasern ausgebildete Hybridfasern, bebindert oder während des Herstellungsverfahrens zu bebindernd eingesetzt werden können.

Ferner können in alternativen Ausführungsformen des erfindungsgemäßen Verfahrens auch andere Fasern, Faserbündel oder Filamente zur Ausbildung der Endlosfasern und/oder Endlosverstärkungsfaser(n) eingesetzt werden, welche nicht zwingend bebindert sein müssen. Derartige Fasern, Filamente oder Faserbündel können beispielsweise auch mittels eines anderen Beschichtungsverfahrens beschichtet sein bzw. werden.

Alternativ oder zusätzlich zu den einzelnen Filamenten, Fasern und/oder Faserbündeln können bei der Herstellung eines faserverstärkten Halbzeuges auch sogenannte unidirektionale Bänder zum Einsatz kommen. Unter unidirektionalen Bändern sind insbesondere dicht aneinandergereihte, beispielsweise durch ein Harz in Position gehaltene Stränge zu verstehen. Ferner können die einzelnen nebeneinander angeordneten Stränge auch durch Schussfäden, welche quer in die nebeneinander angeordneten Stränge eingeschossen werden, zusammengehalten werden.

Anwendungsfallspezifisch können innerhalb einer Lage gleiche oder unterschiedliche Fasern, Faserbündel, Filamente und/oder unidirektionale Bänder mit gleichen oder unterschiedlichen Eigenschaften Anwendung finden. Ebenso können sich auch die Fasern, Faserbündel, Filamente und/oder unidirektionale Bänder der einzelnen Lagen voneinander unterscheiden oder gleich sein.

Die Endlosfasern jeder der wenigstens zwei Lagen sind also bei dem erfindungsgemäßen Verfahren jeweils unidirektional ausgerichtet. Aber die Endlosfaser-Verstärkungsfasern der Verstärkung sind lastpfadgerecht ausgelegt, können also beispielsweise wellenförmig, zickzackförmig oder in anderer, zweckmäßiger Ausgestaltung abgelegt sein. Das erfindungsgemäße Verfahren kombiniert also da halbzeugendkonturentsprechende Ablegen der Endlosfasern in den wenigstens zwei Lagen mit der lastpfadgerechten Ablage der wenigstens eine Endlos-Verstärkungsfaser der Verstärkung.

In alternativen Ausführungsführungsvarianten des erfindungsgemäßen Verfahrens kann der Lagentransport zum Ablegen und/oder Ablängen der Endlosfasern und/oder der wenigstens einer Endlos-Verstärkungsfaser auch getaktet durchgeführt werden.

Vorzugsweise sind die in den wenigstens zwei Lagen jeweils nebeneinander liegenden Endlosfasern aus aufgespreizten Einzelrovings ausgebildet und weisen eine Flächenmasse in der jeweiligen Lage in einem Bereich von 50 bis 300 g/m² auf. In den unterschiedlichen Lagen des Halbzeuges sind verschiedene Flächengewichte möglich. Das jeweilige Flächengewicht der Lage wird durch das verwendete Endlosfaservorprodukt, also durch die jeweils verwendete Endlosfaserspule, bestimmt.

Beispielsweise kann in dem erfindungsgemäßen Verfahren zur Ausbildung der für die Herstellung der wenigstens zwei Lagen verwendeten Endlosfasern ein 50K-Roving, also ein aus 50000 Einzelfilamenten bestehender Faserstrang, mit einer Breite von ca. 14 bis 15 mm und einem Flächengewicht von ca. 300 g/m² eingesetzt werden, der durch einen dem erfindungsgemäßen Verfahren vorgelagerten Aufspreizprozess in Einzelrovings aufgespreizt wird, die beispielsweis ein Flächengewicht von 150 g/m² besitzen und die dann als Endlosfasern zur Ausbildung der wenigstens zwei Lagen verwendet werden. Grundsätzlich sind auch andere Rovings, wie beispielsweise 24K-Rovings, einsetzbar.

Nach Ablage von wenigstens zwei der Lagen des Halbzeuges können die in Halbzeugendkonturform abgelegten Lagen, vorteilhafterweise einschließlich der Verstärkung, thermisch, mechanisch und/oder chemisch verfestigt und damit in ihrer Form fixiert. Vorzugsweise erfolgt die thermische, mechanische und/oder chemische Verfestigung dann, wenn alle der Lagen abgelegt sind. Es kann jedoch in bestimmten Ausführungsformen der Erfindung auch eine Zwischenverfestigung einzelner Lagenanordnungen erfolgen. So kann beispielsweise die Verfestigung und/oder Fixierung der Lagen nicht erst am Ende des Lagenablageprozesses stattfinden, sondern kann beispielsweise auch nach dem Ablegen jeder einzelnen Lage des Halbzeuges, jeder zweiten, jeder n-ten oder nach einer variierenden, unregelmäßigen Anzahl an abgelegten Lagen durchgeführt werden.

Eine Verfestigung und/oder Fixierung der Lagen kann beispielweise durch Druck und/oder Temperatureintrag in Form von Infrarotbestrahlung, Ultraschallbeaufschlagung, Heißluftbeaufschlagung, Laserbehandlung oder ähnlichem erfolgen.

Die chemische, thermische und/oder mechanische Verfestigung und/oder Fixierung wenigstens einer der Lagen kann erfindungsgemäß örtlich begrenzt, beispielsweise nur an den Seitenrändern der Halbzeugendkonturform, punktuell oder über die ganze Fläche der Halbzeugendkonturform vorgenommen werden.

Vorzugsweise weisen die wenigstens zwei Lagen des mit dem erfindungsgemäßen Verfahren hergestellten Halbzeuges eine symmetrische Anordnung der verwendeten Endlosfasern, also eine Spiegelsymmetrie der Lagen in der Dickenrichtung eines aus den wenigstens zwei Lagen ausgebildeten Lagenstapels, auf. Dies kann in speziellen Ausführungsformen des erfindungsgemäßen Verfahrens auch dadurch realisiert werden, dass zunächst ein in seinen Lagen unsymmetrischer Lagenstapel ausgebildet wird, auf dessen Rückseite in einem zweiten Prozessdurchlauf des erfindungsgemäßen Verfahrens der gleiche Lagenstapel spiegelsymmetrisch auf die Rückseite des mit dem ersten Prozessdurchlauf des erfindungsgemäßen Verfahrens ausgebildeten Lagenstapels aufgebracht wird. Hierdurch erhält man ein Halbzeug und später ein daraus herstellbares Bauteil mit einer isotropen Kraftaufnahme.

Ein hinsichtlich seiner Kraftaufnahme spiegelsymmetrisches Halbzeug kann erfindungsgemäß auch dadurch ausgebildet werden, dass in einem ersten Verfahrensdurchlauf eine erste Verstärkung aus wenigstens einer Endlos-Verstärkungsfaser auf den wenigstens zwei Lagen ausgebildet wird und in einem zweiten Verfahrensdurchlauf auf der Rückseite des aus den wenigstens zwei Lagen ausgebildeten Lagenstapels eine zweite, zu der ersten Verstärkung spiegelsymmetrisch ausgebildete Verstärkung aus wenigstens einer Endlos-Verstärkungsfaser ausgebildet wird. Dadurch bildet sich der Lastpfad auf Vorder- und Rückseite des Halbzeuges spiegelbildlich aus.

Bevorzugte Ausführungsformen der vorliegenden Erfindung, deren Aufbau, Funktion und Vorteile werden im Folgenden anhand von Figuren näher erläutert, wobei
- Figur 1: schematisch eine mögliche Ausbildung einer das erfindungsgemäße Verfahren ausführenden Anlage in einer Draufsicht zeigt;
- Figur 2: schematisch eine mit ersten Schritten des erfindungsgemäßen Verfahrens herstellbare, aus zwei übereinander abgelegten Lagen aus Endlosfasern ausgebildete Halbzeugvorstufe in einer Draufsicht zeigt;
- Figur 3: schematisch ein auf Basis der Halbzeugvorstufe aus Figur 2 mit weiteren Schritten des erfindungsgemäßen Verfahrens herstellbares Halbzeug aus zwei Lagen von Endlosfasern mit einer Verstärkung aus Endlos-Verstärkungsfasern in einer Draufsicht zeigt; und
- Figur 4: schematisch ein anderes, auf Basis der Halbzeugvorstufe aus Figur 2 mit weiteren Schritten des erfindungsgemäßen Verfahrens herstellbares Halbzeug aus zwei Lagen von Endlosfasern mit einer Verstärkung aus Endlos-Verstärkungsfasern, die um Krafteinleitungspunkte eines herzustellenden Bauteils geführt sind, in einer Draufsicht zeigt.

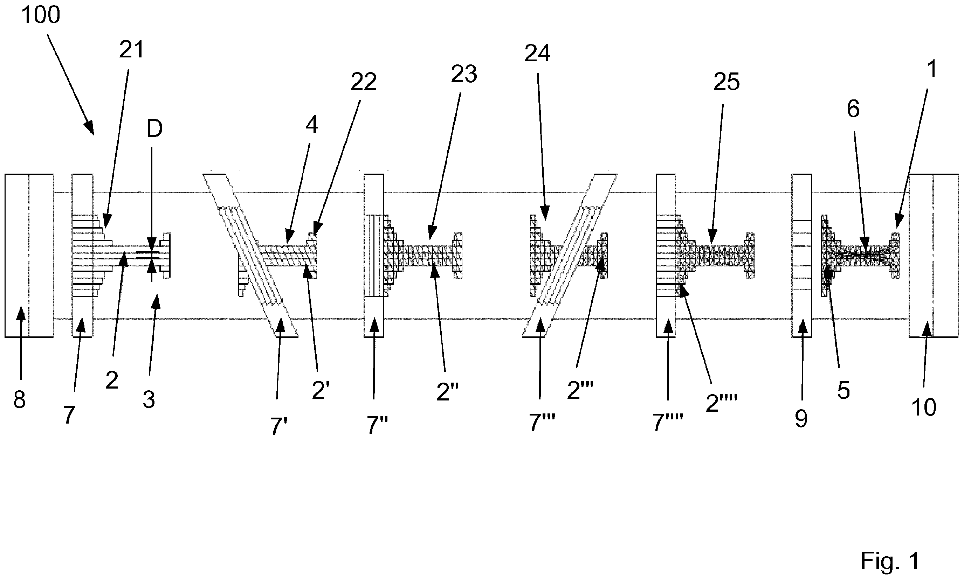

Figur 1 zeigt schematisch eine mögliche Ausbildung einer Anlage 100, auf der eine Variante des erfindungsgemäßen Verfahrens ausführbar ist, in einer Draufsicht.

Zur Herstellung eines in diesem Ausführungsbeispiel aus fünf übereinander angeordneten Lagen 21, 22, 23, 24, 25 ausgebildeten Halbzeuges ohne Trägermaterial werden in einer ersten Verlegeeinrichtung 7 mehrere parallel nebeneinander angeordnete Endlosfasern 2 direkt auf ein Transportband 3 in einer Endkonturform eines herzustellenden Halbzeuges 1 abgelegt. Die durch die erste Verlegeeinrichtung 7abgelegten Endlosfasern 2 bilden eine erste Lage 21 des zu fertigenden Halbzeuges 1 aus.

In dem in Figur 1 gezeigten Ausführungsbeispiel sind die Endlosfasern 2 der ersten Lage 21 in Transportrichtung der Lagen 21, 22, 23, 24, 25 ausgerichtet und weisen einen gleichbleibenden Abstand D zueinander auf. In anderen, nicht gezeigten Ausgestaltungsvarianten des erfindungsgemäßen Verfahrens können die Endlosfasern 2 der ersten Lage 21 jedoch auch eine andere als die gezeigte Faserorientierung und/oder einen anderen als den gezeigten Abstand zueinander aufweisen. Auch können die Endlosfasern 2 sich zumindest teilweise überlappend verlegt werden.

In dem gezeigten Ausführungsbeispiel wird direkt nach dem Ablegen der ersten Lage 21, während des kontinuierlichen Transportes der Lage 21, die die erste Lage 21 ausbildenden Endlosfasern 2 abgelängt. Das Ablängen der Endlosfasern 2 kann vorzugsweise mit einer mit der Verlegeeinrichtung 7 gekoppelten oder koppelbaren Ablängeinrichtung erfolgen, wobei das Ablängen beispielsweise mittels Laser, Wasserstrahl, Ultraschall oder mechanisch erfolgen kann.

Die in der ersten Verlegeeinrichtung 7 abgelegte erste Lage 21 wird mittels des kontinuierlich angetriebenen Transportbandes 3 zu einer in Transportrichtung nachfolgenden zweiten Verlegeeinrichtung 7' gefördert, in welcher direkt auf die erste Lage 21 eine aus Endlosfasern 2' bestehende zweite Lage 22 abgelegt wird. Wie die erste Lage 21, wird auch die zweite Lage 22 in der herzustellenden Halbzeugendkonturform abgelegt.

Das Transportband 3 wird in dieser Ausführungsvariante durch einen Antriebsmechanismus 8 kontinuierlich angetrieben, kann in alternativen Ausführungsformen jedoch auch taktweise betrieben werden.

Wie in Figur 1 ersichtlich, weisen die die zweite Lage 22 ausbildenden Endlosfasern 2' eine zu den Endlosfasern 2 der ersten Lage 21 verschiedene Faserorientierung auf. In diesem Ausführungsbeispiel sind die Endlosfasern 2' der zweiten Lage um ca. 100° zu den Endlosfasern 2 der ersten Lage 21 geneigt angeordnet, können in alternativen Ausführungsformen jedoch in einem anderen Winkel zu den Endlosfasern 2 der ersten Lage 21 ausgerichtet werden.

Wie die Endlosfasern 2 der ersten Lage 21, werden auch die Endlosfasern 2' der zweiten Lage 22 vorzugsweise geradlinig, parallel, mit einem definierten Abstand D zueinander verlegt, können jedoch auch wie die Endlosfasern 2 der ersten Lage 21 in anderer Art und Weise verlegt werden.

Nach dem Ablegen und Ablängen der die zweite Lage 22 ausbildenden Endlosfasern 2' werden die beiden übereinander abgelegten Lagen 21, 22 zu einer dritten Verlegeeinrichtung 7" bewegt, mittels welcher eine dritte aus Endlosfasern 2" ausgebildete Lage 23 auf die beiden ersten Lagen 21, 22 abgelegt wird.

In diesem Ausführungsbeispiel weisen die Endlosfasern 2" der dritten Lage 23 eine sich von den Endlosfasern 2, 2' der ersten beiden Lagen 21, 22 unterscheidende Faserorientierung auf, können jedoch auch mit einer der Endlosfasern 2, 2' der ersten oder zweiten Lage 21, 22 entsprechenden Faserorientierung abgelegt werden.

Nach dem Ablegen und Ablängen der Endlosfasern 2" der dritten Lage 23 werden die Lagen 21, 22, 23 zu einer vierten Verlegeeinrichtung 7'" gefördert, wo eine vierte Lage 24 aus Endlosfasern 2'" auf die ersten drei Lagen 21, 22, 23 abgelegt wird. Die Endlosfasern 2'" der vierten Lage 24 weise vorteilhafterweise eine sich von der Faserorientierung der Endlosfasern 2, 2', 2" der ersten drei Lagen 21, 22, 23 unterscheidende Faserorientierung auf, können in alternativen Ausgestaltungsvarianten jedoch auch mit einer der ersten, zweiten und/oder dritten Lage 21, 22, 23 entsprechenden Faserorientierung verlegt werden.

Das kontinuierlich bewegte Transportband 3 fördert die ersten vier Lagen 21, 22, 23, 24 zu einer fünften Verlegeeinrichtung 7"", wo eine fünfte Lage 25 in Halbzeugendkonturform auf die zuvor abgelegten vier Lagen 21, 22, 23, 24 aufgebracht wird. Die die fünfte Lage 25 ausbildenden Endlosfasern 2"" weisen in dem in Figur 1 gezeigten Ausführungsbeispiel die gleiche Ausrichtung und den gleichen Abstand wie die Endlosfasern 2 der ersten Lage 21 auf, können in weiteren Ausgestaltungsvarianten jedoch auch mit einer anderen Ausrichtung und/oder Anordnung auf der vierten Lage 24 abgelegt werden.

Zudem ist es in anderen Ausführungsformen des herzustellenden Halbzeuges auch möglich, dass das Halbzeug aus weniger oder mehr als fünf Lagen 21, 22, 23, 24, 25 ausgebildet wird und/oder eine andere Ausrichtung und Anordnung der Endlosfasern 2, 2', 2", 2"', 2"" der einzelnen Lagen 21, 22, 23, 24, 25 gewählt wird.

Die in Figur 1 dargestellte säulenförmige Halbzeugendkonturform stellt lediglich ein Ausführungsbeispiel dar. Erfindungsgemäß kann jede beliebige Endkonturform durch die Endlosfasern 2, 2', 2", 2"', 2'" ausgebildet werden.

Wie in Figur 1 ersichtlich, werden den Endlosfasern 2, 2', 2", 2"', 2"" lediglich auf dem Transportband 3 abgelegt, ohne in einer an dem oder in der Nähe des Transportbandes 3 vorgesehenen Halterung eingelegt, eingeklemmt, diese umwickelnd oder in ähnlicher Weise an dieser befestigt zu werden. Dies hat den Vorteil, dass jegliche Endkonturform, völlig unabhängig von der Breite des Transportbandes 3 gelegt werden kann und zugleich die Fertigungszeit des herzustellenden Halbzeuges verringert werden kann, da ein zeitintensives und schwierig zu bewerkstelligendes Umschlingen, Einklemmen oder Einlegen der Endlosfasern 2 in eine oder an einer Halterung vermieden werden kann.

Nachdem alle das Halbzeug 1 ausbildenden Lagen 21, 22, 23, 24, 25 übereinander abgelegt wurden, können die Lagen 21, 22, 23, 24, 25 wie in Figur 1 gezeigt, zu einer Verfestigungsfaserverlegeeinrichtung 9 transportiert werden, in welcher wenigstens eine, eine Verstärkung 6 ausbildende Endlos-Verfestigungsfaser 5 auf die Lagen 21, 22, 23, 24, 25 abgelegt wird. Die Verstärkung 6 dient insbesondere der Stabilitätserhöhung des herzustellenden Halbzeuges 1 in Bereichen mit besonders hohen Belastungen.

Vorteilhafterweise wird die Verstärkung 6 aus wenigstens einer, einer vorgegebenen Kontur angepasst verlegten Endlos-Verstärkungsfaser 5 ausgebildet. Bevorzugt wird die Verstärkung 6 lediglich in einem bestimmten Bereich des Halbzeuges 1 aufgebracht, kann jedoch auch über die komplette Halbzeugendkonturform vorgesehen werden.

In einem nachfolgenden letzten Schritt werden die Lagen 21, 22, 23, 24, 25 mit der aufgebrachten Verstärkung 6 in einer Verfestigungseinrichtung 10 thermisch, chemisch und/oder mechanisch verfestigt und/oder fixiert. In alternativen Ausgestaltungsvarianten des erfindungsgemäßen Verfahrens kann die Verfestigung und/oder Fixierung der Lagen 21, 22, 23, 24, 25 jedoch auch an einer anderen Stelle des Verfahrens erfolgen. Zudem kann eine Verfestigung und/oder Fixierung auch an mehreren Stellen des Verfahrens vorgesehen werden.

Ferner ist es möglich, in einer weiteren Ausführungsform des erfindungsgemäßen Verfahrens die erste Lage 21 aus Endlosfasern 2 nicht auf das Transportband 3 abzulegen, sondern auf ein Trägermaterial aufzubringen. Dabei kann die erste Lage 21 hierbei durch Nähen, Kleben, Verschmelzen oder ähnlichem mit dem Trägermaterial verbunden werden oder aber lediglich auf dem Trägermaterial abgelegt weiterverarbeitet werden. Hierbei kann das verwendete Trägermaterial als Trägerbahn dem Verfahren zugeführt werden und in einem nachfolgenden Verfahrensschritt zugeschnitten werden oder aber bereits die Halbzeugendkonturform aufweisend oder eine andere beliebige Form besitzend dem Verfahren zugeleitet werden.

Ebenso ist es möglich, dass das Trägermaterial zwischen wenigstens zwei Lagen 21, 22, 23, 24, 25 und/oder als Deckschicht alle Lagen 21, 22, 23, 24, 25 abdeckend vorgesehen wird. Die Verwendung eines zusätzlichen Trägermaterials bietet insbesondere die Vorteile, dass das Handling und die Stabilität des Halbzeuges verbessert werden kann.

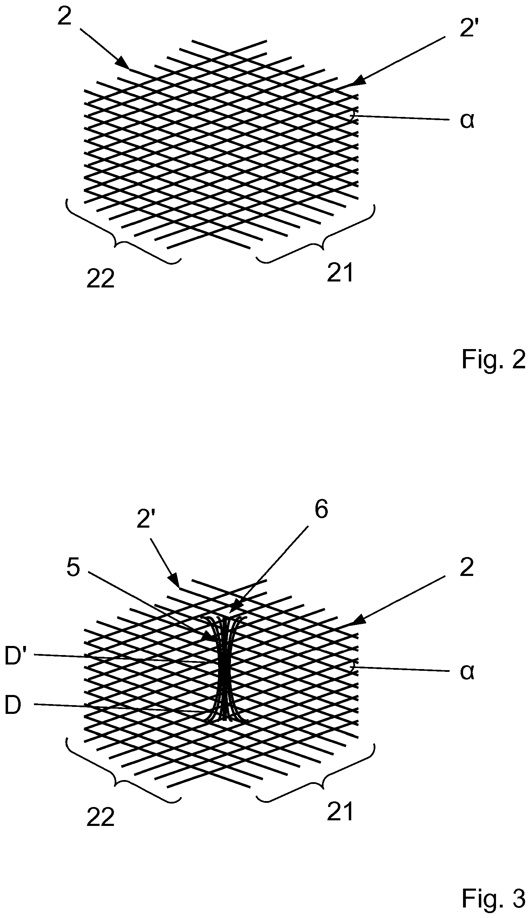

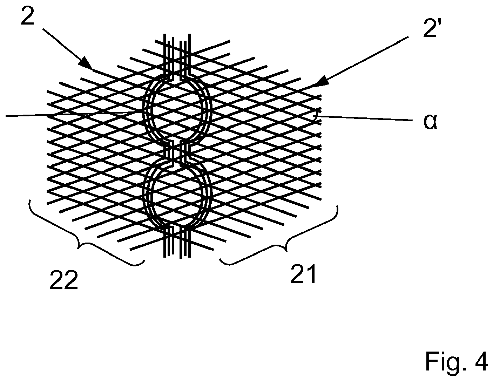

Figur 2 zeigt schematisch eine mit ersten Schritten des erfindungsgemäßen Verfahrens herstellbare, beispielhaft aus zwei übereinander abgelegten Lagen 21, 22 aus Endlosfasern 2, 2' ausgebildeten Halbzeugvorstufe 1a in einer Draufsicht, wohingegen Figur 3 schematisch eine mögliche Ausführungsform eines auf Basis der Halbzeugvorstufe aus Figur 2 mit weiteren Schritten des erfindungsgemäßen Verfahrens herstellbaren Halbzeuges 1 in einer Draufsicht zeigt. Das Halbzeug 1 weist zwei Lagen 21, 22 mit einer Verstärkung 6 aus Endlos-Verstärkungsfasern 5 auf. In Figur 4 ist ein weiteres, mit Hilfe des erfindungsgemäßen Verfahrens herstellbares Halbzeug 1' bei dem Endlos-Verstärkungsfasern 5 um Krafteinleitungspunkte 11 eines herzustellenden Bauteils geführt sind gezeigt. In den Figuren 2 bis 4 bezeichnen gleiche Bezugszeichen wie in Figur 1 gleiche Komponenten, weshalb auf die vorangegangene Beschreibung zu diesen Komponenten verwiesen wird.

Wie in Figur 2 ersichtlich, werden die übereinander abgelegten Lagen 21, 22 aus einzelnen Endlosfasern 2, 2' ausgebildet, wobei die Endlosfasern 2' der zweiten Lage 22 in einem Winkel α zu den Endlosfasern 2 der ersten Lage 21 angeordnet sind. Die Größe des Winkels α ist anwendungsfallspezifisch zu wählen.

Die in Figur 2 dargestellte Form der aufeinander abgelegten Lagen 21, 22 ist nur beispielhaft gewählt und kann je nach Ausführungsform des herzustellenden Halbzeuges 1 jede beliebige andere Form aufweisen.

In Figur 3 ist schematisch ein mit dem erfindungsgemäßen Verfahren herstellbares Halbzeug 1 gezeigt, das eine auf die Lagen 21, 22 aus einzelnen Endlosfasern 5 abgelegte Verstärkung 6 aufweist. Wie beispielhaft veranschaulicht, sind die Endlos-Verstärkungsfasern 5 der Verstärkung 6 einer vorgegebenen Kontur angepasst verlegt, wobei zwischen den einzelnen Endlos-Verstärkungsfasern 5 der Verstärkung 6 ein über die Länge der Endlos-Verstärkungsfasern 5 variierender Abstand D, D' vorgesehen ist. In alternativen Ausführungsformen können die einzelnen Endlos-Verstärkungsfasern 5 der Verstärkung 6 jedoch auch mit gleichbleibendem Abstand zueinander verlegt werden.

Vorzugsweise wird die Verstärkung 6 nur örtlich begrenzt auf den die Halbzeugendkonturform ausbildenden Lagen 21, 22 aufgebracht, kann jedoch auch über die gesamte Halbzeugendkonturform vorgesehen werden. Ferner können auch mehrere partiell vorgesehene Verstärkungen 6 auf den wenigstens zwei Lagen 21, 22, 23, 24, 25 aufgebracht werden.

In dem Ausführungsbeispiel von Figur 4 ist schematisch und wiederum beispielhaft ein auf Basis der Halbzeugvorstufe 1a aus Figur 2 mit dem erfindungsgemäßen Verfahren ausgebildetes Halbzeug 1' in einer Draufsicht dargestellt, wobei hier die Endlos-Verstärkungsfasern 5 um spätere Krafteinleitungspunkte 11 eines aus dem Halbzeug 1' herzustellenden Bauteils herumgeführt sind. In die Krafteinleitungspunkte 11 können beispielsweise später bei dem herzustellenden Bauteil Bolzen oder ähnliches eingeführt werden, wobei die um die Krafteinleitungspunkte 11 herumgeführten Endlos-Verstärkungsfasern 5 auch bei erhöhtem Krafteintrag in die Krafteinleitungspunkte 11 eine geeignete Geometriestabilisierung bewirken.

In alternativen Ausführungsformen des herzustellenden Halbzeuges 1, 1' können die Endlos-Verstärkungsfasern 5 bzw. die Endlosfasern 2, 2', 2", 2"', 2"" auch in anderer Form als in den Figuren dargestellt verlegt werden. Zudem kann das herzustellende Halbzeug 1 auch eine andere Endkonturform aufweisen und/oder aus einer anderen Anzahl an Lagen 21, 22, 23, 24, 25 ausgebildet werden.

## Patentansprüche

1. Verfahren zum Herstellen von flächigen, faserverstärkten Halbzeugen (1) für Faser-Kunststoff-Verbundbauteile, bei dem Endlosfasern (2, 2', 2", 2"', 2"") in wenigstens zwei Lagen (21, 22, 23, 24, 25) übereinander während eines mittels eines Lagentransportmechanismus durchgeführten kontinuierlichen Transportes dieser Lagen (21, 22, 23, 24, 25) in einer Transportrichtung abgelegt werden, wobei die Faserorientierung in einer ersten Lage (21) der wenigstens zwei Lagen (21, 22, 23, 24, 25) sich von der Faserorientierung in wenigstens einer weiteren Lage (22) der wenigstens zwei Lagen (21, 22, 23, 24, 25) während des Transportes der wenigstens zwei Lagen (21, 22, 23, 24, 25) unterscheidet, wobei die Endlosfasern (2, 2', 2", 2"', 2"") der wenigstens zwei Lagen (21, 22, 23, 24, 25) ohne seitliche Halterung der Endlosfasern (2, 2', 2", 2"', 2"") in einer von der Breite eines verwendeten Transportbandes (3) und/oder der Breite des Lagentransportmechanismus unabhängigen, aber sich nicht über die Breite des Transportbandes (3) und/oder die Breite des Lagentransportmechanismus erstreckenden Halbzeugendkonturform mit wenigstens zwei Verlegeeinrichtungen (7, 7', 7", 7"', 7"") gerade abgelegt und entsprechend der jeweiligen Breite der Halbzeugendkonturform nach dem zumindest teilweisen Ablegen zu einer der Lagen (21, 22, 23, 24, 25) während des Transportes der jeweiligen Lage (21, 22, 23, 24, 25) abgelängt werden und in wenigstens einem Bereich der Halbzeugendkonturform auf den Lagen (21, 22, 23, 24, 25) wenigstens eine eine Verstärkung (6) ausbildende Endlos-Verstärkungsfaser (5) verlegt wird.

2. Verfahren nach Anspruch 1, **dadurch gekennzeichnet, dass** die Endlosfasern (2, 2', 2", 2"', 2"") nach dem Ablegen zu einer der Lagen während des Transportes der jeweiligen Lage abgelängt werden.

3. Verfahren nach Anspruch 1 oder 2, **dadurch gekennzeichnet, dass** die Verstärkung (6) zuoberst auf einem aus allen der wenigstens zwei Lagen (21, 22, 23, 24, 25) ausgebildeten Lagenstapel vorgesehen wird.

4. Verfahren nach wenigstens einem der vorhergehenden Ansprüche, **dadurch gekennzeichnet, dass** die Verstärkung (6) in einem Randbereich eines aus wenigstens zwei der Lagen (21, 22, 23, 24, 25) ausgebildeten Lagenstapels vorgesehen wird.

5. Verfahren nach wenigstens einem der vorhergehenden Ansprüche, **dadurch gekennzeichnet, dass** die wenigstens zwei Lagen (21, 22, 23, 24, 25) direkt auf eine Oberfläche des Transportbandes (3), ohne Verwendung eines Trägermaterials unter den oder zwischen zwei der oder auf den wenigstens zwei Lagen (21, 22, 23, 24, 25) abgelegt werden.

6. Verfahren nach wenigstens einem der vorhergehenden Ansprüche, **dadurch gekennzeichnet, dass** die wenigstens zwei Lagen (21, 22, 23, 24, 25) in der Dickenrichtung eines aus den wenigstens zwei Lagen (21, 22, 23, 24, 25) ausgebildeten Lagenstapels spiegelsymmetrisch zueinander ausgebildet und angeordnet werden.

7. Verfahren nach Anspruch 6, **dadurch gekennzeichnet, dass** in einem ersten Verfahrensdurchlauf ein erster Lagenstapel aus den wenigstens zwei Lagen (21, 22, 23, 24, 25) ausgebildet wird, auf dessen Rückseite in einem zweiten Verfahrensdurchlauf ein zu dem ersten Lagenstapel spiegelsymmetrisch ausgebildeter zweiter Lagenstapel aus den wenigstens zwei Lagen (21, 22, 23, 24, 25) aufgebracht wird.

8. Verfahren nach wenigstens einem der vorhergehenden Ansprüche, **dadurch gekennzeichnet, dass** in einem ersten Verfahrensdurchlauf eine erste Verstärkung (6) auf den wenigstens zwei Lagen (21, 22, 23, 24, 25) ausgebildet wird und in einem zweiten Verfahrensdurchlauf auf der Rückseite des aus den wenigstens zwei Lagen (21, 22, 23, 24, 25) ausgebildeten Lagenstapels eine zweite, zu der ersten Verstärkung (6) spiegelsymmetrisch ausgebildete Verstärkung (6) ausgebildet wird.

9. Verfahren nach wenigstens einem der vorhergehenden Ansprüche, **dadurch gekennzeichnet, dass** die Endlosfasern (2, 2', 2", 2"', 2"") wenigstens einer der wenigstens zwei Lagen (21, 22, 23, 24, 25) in einem Abstand (D, D') zwischen 6 mm und 100 mm verlegt werden.

10. Verfahren nach wenigstens einem der vorhergehenden Ansprüche, **dadurch gekennzeichnet, dass** die in den wenigstens zwei Lagen (21, 22, 23, 24, 25) jeweils nebeneinander liegenden Endlosfasern (2, 2', 2", 2"', 2"") aus aufgespreizten Einzelrovings ausgebildet werden und mit einer Flächenmasse in der jeweiligen Lage (21, 22, 23, 24, 25) in einem Bereich von 50 bis 300 g/m² abgelegt werden.

11. Verfahren nach wenigstens einem der vorhergehenden Ansprüche, **dadurch gekennzeichnet, dass** der Abstand zwischen benachbarten Abschnitten der Endlos-Verstärkungsfaser(n) (5) über die Länge der benachbarten Abschnitte variiert wird.

12. Verfahren nach wenigstens einem der vorhergehenden Ansprüche, **dadurch gekennzeichnet, dass** trockene Filamente oder Faserverbände, aus Verstärkungs- und Matrixfasern bestehende Hybridfasern, bebinderte Filamente oder Faserverbände, während des Halbzeugherstellungsverfahrens zu bebindernde Filamente oder Faserverbände und/oder thermoplastische unidirektionale Bänder als Endlosfasern (2, 2', 2", 2"', 2"") und/oder Endlos-Verstärkungsfaser (5) verwendet werden.

13. Verfahren nach wenigstens einem der vorhergehenden Ansprüche, **dadurch gekennzeichnet, dass** die wenigstens zwei Lagen (21, 22, 23, 24, 25) in der abgelegten und durch die wenigstens eine Endlos-Verstärkungsfaser (5) verstärkten Halbzeugendkonturform thermisch und/oder mechanisch und/oder chemisch verfestigt werden.

## Claims

1. Method for producing flat, fiber-reinforced semi-finished products (1) for fiber-plastics composite components, in which continuous fibers (2, 2', 2", 2"', 2"") are deposited in at least two layers (21, 22, 23, 24, 25) one on top of the other during a continuous transport of these layers (21, 22, 23, 24, 25) by means of a layer transport mechanism in a transport direction, wherein the fiber orientation in a first layer (21) of the at least two layers (21, 22, 23, 24, 25) differs from the fiber orientation in at least one further layer (22) of the at least two layers (21, 22, 23, 24, 25) during the transport of the at least two layers (21, 22, 23, 24, 25), wherein the continuous fibers (2, 2', 2", 2"', 2"") of the at least two layers (21, 22, 23, 24, 25) are deposited without lateral support of the continuous fibers (2, 2', 2", 2"', 2"") in a semi-finished product contour shape which has at least two laying devices (7, 7', 7", 7"', 7"") and is independent of the width of a transport belt (3) used and/or the width of the layer transport mechanism, but does not extend beyond the width of the transport belt (3) and/or the width of the layer transport mechanism and are cut to length so as to correspond to the relevant width of the semi-finished product contour shape after being deposited at least partially on one of the layers (21, 22, 23, 24, 25) during the transport of the relevant layer (21, 22, 23, 24, 25) and at least one continuous reinforcing fiber (5) forming a reinforcing piece (6) is laid in at least one region of the semi-finished product contour shape on the layers (21, 22, 23, 24, 25).

2. Method according to claim 1, **characterized in that** the continuous fibers (2, 2', 2", 2"', 2"") are cut to length after being deposited on one of the layers during transport of the relevant layer.

3. Method according to either claim 1 or claim 2, **characterized in that** the reinforcing piece (6) is provided on top of a layer stack which is formed from all of the at least two layers (21, 22, 23, 24, 25).

4. Method according to at least one of the preceding claims, **characterized in that** the reinforcing piece (6) is provided in an edge region of a layer stack which is formed from at least two of the layers (21, 22, 23, 24, 25).

5. Method according to at least one of the preceding claims, **characterized in that** the at least two layers (21, 22, 23, 24, 25) are deposited directly on a surface of the transport belt (3), without using a carrier material under or between two of or on the at least two layers (21, 22, 23, 24, 25).

6. Method according to at least one of the preceding claims, **characterized in that** the at least two layers (21, 22, 23, 24, 25) are formed and arranged so as to be mirror-symmetrical in the thickness direction of a layer stack which is formed from the at least two layers (21, 22, 23, 24, 25).

7. Method according to claim 6, **characterized in that** a first layer stack is formed from the at least two layers (21, 22, 23, 24, 25) in a first iteration of the method, on the back of which a second layer stack which is mirror-symmetrical to the first layer stack is applied from the at least two layers (21, 22, 23, 24, 25) in a second iteration of the method.

8. Method according to at least one of the preceding claims, **characterized in that** a first reinforcing piece (6) is formed on the at least two layers (21, 22, 23, 24, 25) in a first iteration of the method and a second reinforcing piece (6) which is mirror-symmetrical to the first reinforcing piece (6) is formed on the back of the layer stack which is formed from at least two layers (21, 22, 23, 24, 25) in a second iteration of the method.

9. Method according to at least one of the preceding claims, **characterized in that** the continuous fibers (2, 2', 2", 2"', 2"") of at least one of the at least two layers (21, 22, 23, 24, 25) are laid at a distance (D, D') of between 6 mm and 100 mm.

10. Method according to at least one of the preceding claims, **characterized in that** the continuous fibers (2, 2', 2", 2"', 2"") which lie next to one another in the at least two layers (21, 22, 23, 24, 25) are formed from spread individual rovings and are deposited at a basis weight in the relevant layer (21, 22, 23, 24, 25) in a range of from 50 to 300 g/m².

11. Method according to at least one of the preceding claims, **characterized in that** the distance between adjacent portions of the continuous reinforcing fiber(s) (5) is varied over the length of the adjacent portions.

12. Method according to at least one of the preceding claims, **characterized in that** dry filaments or fiber strands, hybrid fibers consisting of reinforcing and matrix fibers, obstructed filaments or fiber strands, filaments or fiber strands to be bound during the semi-finished product production method and/or thermoplastic unidirectional tapes are used as continuous fibers (2, 2', 2", 2"', 2"") and/or continuous reinforcing fiber (5).

13. Method according to at least one of the preceding claims, **characterized in that** the at least two layers (21, 22, 23, 24, 25) in the deposited semi-finished product contour shape which is strengthened by the at least one continuous reinforcing fiber (5) are thermally and/or mechanically and/or chemically hardened.

## Revendications

1. Procédé de fabrication de produits semi-finis plats renforcés par des fibres (1) pour des pièces composites en plastique, pour lequel des fibres continues (2, 2', 2", 2"', 2"") sont empilées les unes sur les autres en au moins deux couches (21, 22, 23, 24 , 25) au cours d'un transport continu de ces couches (21, 22, 23, 24, 25) dans une direction de transport, effectué au moyen d'un mécanisme de transport de couches, sachant que l'orientation des fibres d'une première couche (21) faisant partie d'au moins deux couches (21, 22, 23, 24, 25) diffère de l'orientation des fibres dans au moins une autre couche (22) faisant partie d'au mois deux couches (21, 22, 23, 24, 25) pendant le transport d'au moins deux couches (21, 22, 23, 24, 25), sachant que les fibres continues (2, 2', 2", 2"', 2"") de cet ensemble d'au moins deux couches (21, 22, 23, 24, 25) sans support latéral des fibres continues (2, 2', 2", 2"', 2"") indépendamment de la largeur de la bande transporteuse utilisée (3) et/ou de la largeur du mécanisme de transport de couches, mais pas au-delà de la largeur de la bande transporteuse (3) et/ou de la forme du contour du produit semi-fini prolongeant le mécanisme de transport de couches avec au moins deux dispositifs de pose (7, 7', 7", 7"', 7"") sont posées droit et coupées en fonction de la largeur respective de la forme du contour du produit semi-fini après la pose au moins partielle sur l'une des couches (21, 22, 23, 24, 25) pendant le transport de la couche respective (21, 22, 23, 24, 25) et au moins une fibre de renforcement continue (5) formant un renforcement (6) est posée dans au moins une zone de la forme du contour du produit semi-fini sur les couches (21, 22, 23 , 24, 25).

2. Procédé selon la revendication 1, **caractérisé en ce que** les fibres continues (2, 2', 2", 2"', 2"") sont coupées à longueur après avoir été déposées sur l'une des couches pendant le transport de la couche respective.

3. Procédé selon la revendication 1 ou 2, **caractérisé en ce que** le renforcement (6) est prévu au sommet d'une pile de couches, composée de l'ensemble d'au moins deux couches (21, 22, 23, 24, 25).

4. Procédé selon au moins l'une des revendications précédentes, **caractérisé en ce que** le renforcement (6) est prévu dans une zone excentrée d'une pile de couches, composée d'au moins deux couches (21, 22, 23, 24, 25).

5. Procédé selon au moins l'une des revendications précédentes, **caractérisé en ce qu'**au moins deux couches (21, 22, 23, 24, 25) sont déposées directement sur une surface de la bande transporteuse (3), sans utiliser de support sous ou entre deux couches de l'ensemble d'au moins deux couches (21, 22, 23, 24, 25).

6. Procédé selon au moins l'une des revendications précédentes, **caractérisé en ce qu'**au moins deux couches (21, 22, 23, 24, 25) sont organisées et disposées de façon symétrique les unes par rapport aux autres dans le sens de l'épaisseur d'une pile de couches composée d'au moins deux couches (21, 22, 23, 24, 25).

7. Procédé selon la revendication 6, **caractérisé en ce** dans un premier cycle de traitement, une première pile de couches est formée à partir d'au moins deux couches (21, 22, 23, 24, 25), sur sa face arrière, dans un deuxième cycle de traitement, une deuxième pile de couches, formée en symétrie par rapport à la première pile de couches, est appliquée à partir d'au moins deux couches (21, 22, 23, 24, 25).

8. Procédé selon au moins l'une des revendications précédentes, **caractérisé en ce que** dans un premier cycle de traitement, un premier renforcement (6) est formé sur au moins deux couches (21, 22, 23, 24, 25) et, dans un deuxième cycle de traitement, sur la face arrière de la pile de couches, composée d'au moins deux couches (21, 22, 23, 24, 25), un deuxième renforcement (6) est formé de façon symétrique par rapport au premier renforcement (6).

9. Procédé selon au moins l'une des revendications précédentes, **caractérisé en ce que** l'écart (D, D') entre les fibres continues (2, 2', 2", 2'", 2"") de l'ensemble d'au moins deux couches (21, 22, 23, 24, 25) se situe entre 6 mm et 100 mm au moins.

10. Procédé selon au moins l'une des revendications précédentes, **caractérisé en ce que** les fibres continues (2, 2', 2", 2'", 2"") disposées côte à côte dans l'ensemble d'au moins deux couches (21, 22, 23, 24, 25) sont formées de mèches individuelles étalées et sont déposées avec un grammage de 50 à 300 g/m² dans la couche respective (21, 22, 23, 24, 25).

11. Procédé selon au moins l'une des revendications précédentes, **caractérisé en ce que** l'écart entre les sections adjacentes de la ou des fibre(s) de renforcement continue(s) (5) varie sur la longueur des sections adjacentes.

12. Procédé selon au moins l'une des revendications précédentes, **caractérisé en ce que** des filaments ou des assemblages de fibres secs, des fibres hybrides constituées de fibres de renforcement et matricielles, des filaments ou des associations de fibres liés, des filaments ou des assemblages de fibres à lier pendant le processus de production du produit semi-fini et/ou des bandes unidirectionnelles thermoplastiques sont utilisés comme des fibres continues (2, 2', 2", 2"', 2"") et/ou une fibre de renforcement continue (5).

13. Procédé selon au moins l'une des revendications précédentes, **caractérisé en ce qu'**au moins deux couches (21, 22, 23, 24, 25) sont solidifiées thermiquement et/ou mécaniquement et/ou chimiquement dans la forme du contour du produit semi-fini déposé et renforcé par au moins une fibre de renforcement continue (5).
